# EUROPEAN PATENT SPECIFICATION

(11) **EP 3 463 928 B1**
(45) Date of publication and mention of the grant of the patent: **07.05.2025**
(21) Application number: 17729635.7
(22) Date of filing: 26.05.2017
(51) Int. Cl.: B60B 3/10, B60B 7/00, B60B 7/02, B60B 3/06

(54) **AERODYNAMICALLY EFFICIENT SPOKE DESIGN FOR A VEHICLE WHEEL**
AERODYNAMISCH EFFIZIENTER SPEICHENENTWURF FÜR EIN FAHRZEUGRAD
MODÈLE DE RAYON AÉRODYNAMIQUEMENT EFFICIENT POUR ROUE DE VÉHICULE

(30) Priority: 27.05.2016 US 201615166834
(43) Date of publication of application: 10.04.2019
(73) Proprietor: Lacks Enterprises, Inc., Grand Rapids, Michigan 49546 (US)
(72) Inventor: CHINAVARE, Kevin, Middleville MI 49333 (US)
(74) Representative: López Camba, Emilia
(86) International application number: PCT/US2017/034818
(87) International publication number: WO 2017/205821

(56) References cited:
- US-A1- 2013 306 217
- US-A1- 2014 159 469
- US-A1- 2014 265 534
- US-A1- 2016 272 000

## Description

### CROSS-REFERENCE TO RELATED APPLICATIONS

The application claims priority to U.S. Patent Application Serial No. 15/166,834 entitled "Aerodynamic Efficient Spoke Design for a Vehicle Wheel" filed on May 27, 2016, which claims priority to U.S. Patent Application Serial No. 14/212,914 entitled "Aerodynamically Efficient Spoke Design for A Vehicle Wheel" filed on March 14, 2014, which claims priority to U.S. Provisional Patent Application Serial No. 61/793,605, filed on March 15, 2013, and entitled "Aerodynamically Efficient Wheel Spoke Design".

### TECHNICAL FIELD

The present invention relates generally to a wheel design that provides improved aerodynamic performance. More specifically, the present invention relates to (a) a design of a wheel spoke that yields minimal power usage from the pumping of air during rotation to provide improved aerodynamics and (b) a design of a wheel spoke that optimizes the air pressure gradients under and around the vehicle affecting overall vehicle coefficient of drag.

### BACKGROUND OF THE INVENTION

With recent efforts directed toward energy conservation along with the continuing escalation of fuel prices, the automotive industry has put an emphasis on increasing the fuel economy of vehicles that are put onto the road. Efforts to improve the fuel economy of vehicles have resided in improving the operation and efficiency of their engines, reducing the weight of their bodies and chassis, and improving the aerodynamic characteristics of their bodies. While great strides have been made in enhancing vehicle fuel economy as a result of improvements in these areas, there is still significant room for further advancement

Currently, the impact of the wheels and their effect on vehicle aerodynamics as well as fuel economy has been largely unappreciated. While there have been efforts to design and manufacture lighter weight wheels, such as through the removal of material from the spokes or the backsides of the wheel, the primary goal of these efforts has generally been cost considerations and not aerodynamics or fuel economy. Indeed, the prior efforts to remove material from the back side of the wheel spokes likely negatively affected the wheel aerodynamics.

More recently, the potential aerodynamic impact of vehicle wheels themselves has been considered and has focused on the size and shape of the wheel turbine openings. These considerations have largely ignored the fact that most wheel assemblies today employ covers or other structures over the wheel outboard surface that are designed to enhance the aesthetics of the wheel. Any aerodynamic benefit that may result from the design of the wheel alone is not maximized when a wheel cover or other aesthetic feature is secured to the outboard surface of the wheel that does not take into account the aerodynamics of the overall wheel assembly.
(i) In the state of the art is known the document US20140265534 which discloses a wheel for a vehicle includes an inner hub portion that is configured to receive an axle therethrough and which defines an axis of rotation at a center thereof.

It would thus be desirable to provide a wheel that overcomes the disadvantages associated with current wheels and helps contribute to improved fuel efficiency of a vehicle.

### SUMMARY OF THE INVENTION

It is therefore an aspect of the present invention to provide a wheel for a vehicle that provides improved aerodynamics.

It is a related aspect of the present invention to provide a wheel assembly for a vehicle that provides improved aerodynamics.

It is a further aspect of the present invention to provide a wheel that yields improved fuel economy for a vehicle.

It is another related aspect of the present invention to provide a wheel assembly that yields improved fuel efficiency for a vehicle.

According to these and other aspects of the disclosure, a wheel for a vehicle according to the appended claims is provided.

### BRIEF DESCRIPTION OF THE DRAWINGS

Other aspects of the present invention will be readily appreciated, as the same becomes better understood by reference to the following detailed description when considered in connection with the accompanying drawings wherein:
FIG 1 is a perspective view of an exemplary wheel;
FIG 2 is a front view of an exemplary wheel;
FIG 3 is a back view of an exemplary wheel;
FIG 4 is an exploded view of an exemplary wheel assembly;
FIG 5 is schematic cross-sectional illustration of a configuration of a wheel spoke in accordance with the prior art;
Fig. 6 to 14, 16 and 17 are schematic cross-sectional illustrations of a wheel spoke for a wheel assembly in accordance with exemplary configurations not covered by the appended claims.
Fig. 15 is a schematic cross-sectional illustration of a wheel spoke for a wheel assembly according to the invention.

### DETAILED DESCRIPTION OF THE INVENTION

For purposes of description herein, the terms "upper", "lower", "right", "left", "rear", "front", "vertical", "horizontal", and derivatives thereof shall relate to the invention as oriented in the FIGs and are intended merely for purposes of illustration and are not intended to be limiting. It is to be understood that the disclosure may assume various alternative orientations and features, except where expressly specified to the contrary. It is also to be understood that the specific devices and processes illustrated in the attached drawings, and described in the following specification are exemplary embodiments of the inventive concepts defined in the appended claims. The specific dimensions and other physical characteristics relating to the aspects disclosed herein are not to be considered as limiting, unless the claims expressly state otherwise.

The present invention relates generally to a wheel and a wheel assembly for an automobile that can provide reduced power usage as well as improved vehicle aerodynamics and fuel economy. The amount of fuel economy savings can vary based upon other factors, including the configuration of the vehicle and whether the savings may be measured based on city or highway driving. According to an aspect, assuming the same vehicle, the disclosed wheel and wheel assembly can provide benefits over conventional wheels and wheel assemblies. The disclosed wheel and wheel assembly are intended for use with an automotive vehicle, such as a car or truck. In accordance with another aspect, the wheel and wheel assembly could alternatively be used in connection with other types of vehicles.

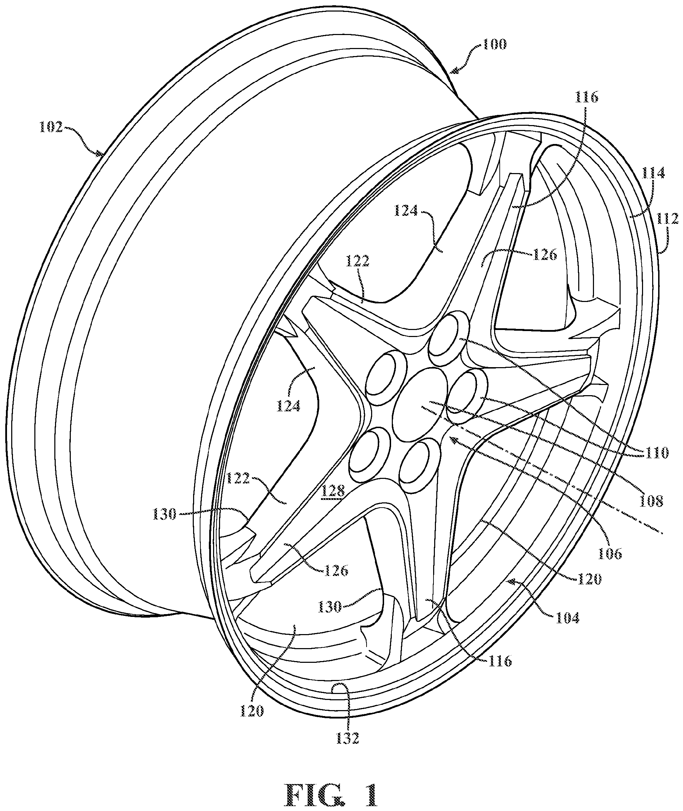

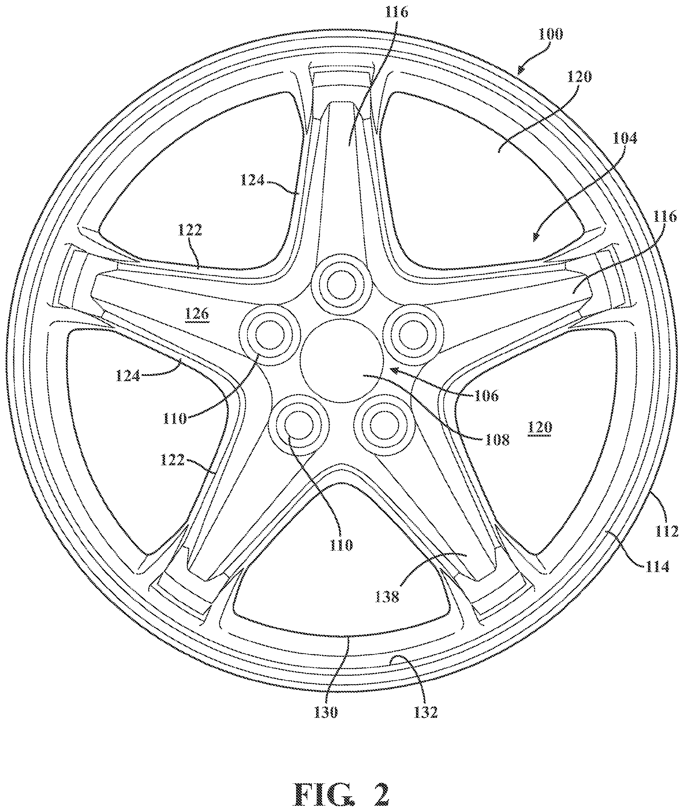

FIGs 1 through 3 generally illustrate an exemplary wheel assembly. According to an aspect, the wheel 100 has an inboard side 102 and an outboard side 104 and includes an inner hub portion 106 having an opening 108 for receipt of an axle (not shown) therethrough. The center of the opening 108 defines an axis of rotation. The hub portion 106 also includes a plurality of lug openings 110 formed therein which receive lug bolts (not shown), for securing the wheel 100 for rotation with a vehicle axle. The wheel 100 also includes a peripheral rim portion 112 with an outer peripheral flange surface 114. The wheel 100 additionally includes a plurality of wheel spokes 116 extending generally radially between the outer peripheral flange surface 114 and the inner hub portion 106. The outer peripheral flange surface 114, the inner hub portion 106, and the plurality of spokes 116 together define a plurality of wheel turbine openings 120. The wheel turbine openings 120 are generally defined by an inner boundary or footprint. The spokes and turbine openings may have a variety of different sizes, shapes and geometries and may be defined by a variety of different surfaces. Additionally, the wheel may employ any number of spokes.

As shown, the wheel turbine opening perimeter 130 may be generally defined by inner side surfaces 122, 124 of adjacent spokes 116 and an inner periphery 132 of the outer peripheral flange surface 114. The wheel turbine openings 120 can have a variety of different shapes and sizes, including nonuniform shapes. Additionally, any number of turbine openings 120 can be formed in the wheel surface 110. According to an aspect, the wheel 100 can be formed from any suitable material, such as aluminum or steel, as is conventional in the automotive industry. Other materials may alternatively be employed. Additionally, any conventional forming or manufacturing process may be employed.

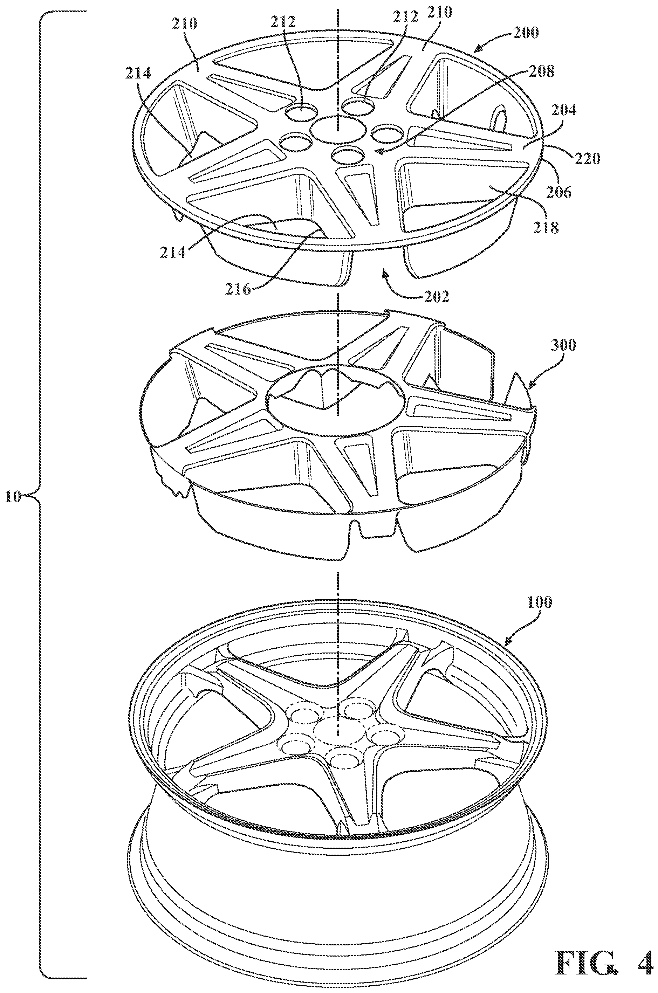

FIG 4 generally illustrates a wheel assembly 10 in accordance with an aspect of the invention. Pursuant to an aspect, the wheel assembly 10 includes a wheel 100 and a wheel cover or clad 200 designed to overlie the outboard side 104 of the wheel such as for aesthetic purposes. The wheel clad 200 can be permanently secured to the wheel 100 by a suitable adhesive to form a completed wheel assembly 10. According to an aspect, the wheel clad 200 may be secured to the wheel 100 by foam adhesive, as generally designated by reference number 300. According to another aspect, any other suitable adhesive may be employed. For example, a silicon adhesive, such as a one part or two part RTV adhesive, may be employed.

As generally shown, the wheel clad 200 has an inboard surface 202 and an outboard surface 204. The wheel clad 200 has a clad outer peripheral portion 206 that is intended to axially align with or overlie at least a portion of the wheel outer peripheral flange surface 114. The wheel clad 200 also includes a hub portion 208 that can be axially aligned with at least a portion of the wheel inner opening portion 106. The wheel clad 200 also can include a plurality of clad spokes 210 that extend radially between the clad outer peripheral portion 206 and the clad inner opening portion 208. The clad spokes 210 may at least partially align with and overlap the wheel spokes 116. The clad outer peripheral portion 206, the clad inner opening portion 208, and the clad spokes 210 cooperate to define a plurality of clad turbine openings 214. The clad 200 also can include a plurality of lug bolt receiving holes 212 formed therein for receiving lugs. It will be appreciated that the clad turbine openings 214 according to the present disclosure can have a variety of different sizes and shapes and can be located in different places on the clad 200.

The wheel clad 200 may be permanently secured to the wheel 100 such that the clad inboard surface 202 faces the wheel outboard side 104. The plurality of clad turbine openings 214 can each have a clad turbine opening perimeter 216 that may be defined by opposing side surfaces 218 of adjacent clad spokes 210 and an inner periphery 220 of the clad outer rim portion 206. As shown, the opposing side surfaces 218 may extend downward toward the wheel outboard surface 104 in a generally planar fashion. The plurality of clad turbine openings 214 may be generally axially aligned with the wheel turbine openings 120, such that each clad turbine opening perimeter 216 may be disposed entirely within a respective one of the wheel turbine openings 120.

According to a further aspect, the wheel clad 200 may be constructed of plastic or composite material. However, other suitable materials may be employed as may be preferred or dictated by the design constraints of the particular application. According to another aspect, the wheel clad 200 may have a metal plated outer surface, such as a chrome plated surface, to provide desirable aesthetics and to yield an appearance that the clad is an integral part of the wheel. Numerous structural combinations of wheel clads with chrome-plated outboard surfaces have attracted great interest from vehicle manufacturers, because they are lightweight, aesthetically pleasing and offer designers complete flexibility with regard to the aesthetic effect that can be created for a specific vehicle regardless of whether these vehicles use steel or aluminum wheels. The clad 200 may be formed by suitable injection molding processes.

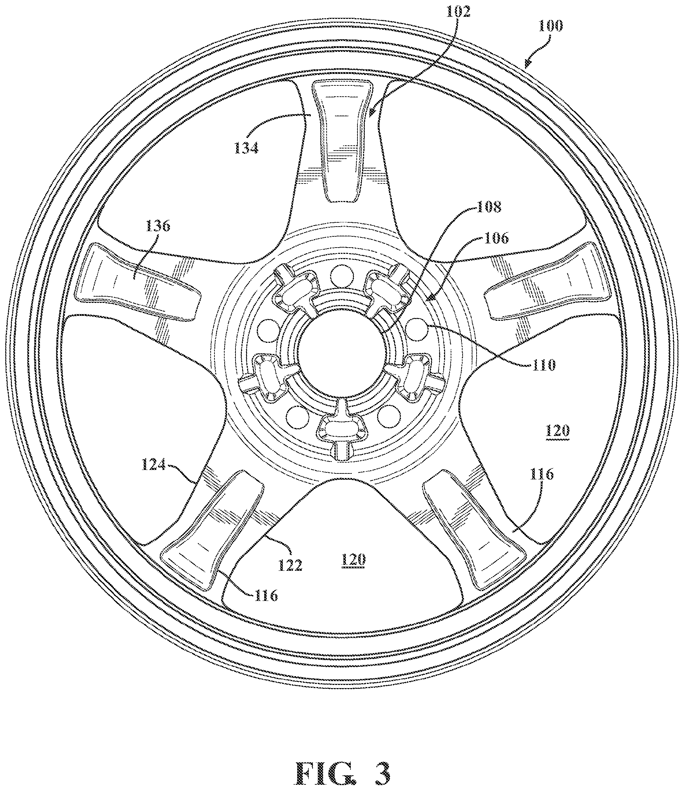

Known efforts to reduce the weight of conventional wheels and wheel assemblies has involved removing weight from the inboard side of the wheel. One such exemplary weight removal structure is as a weight reduction pocket which is formed on the inner surface 134 of the wheel spokes 116. Exemplary weight reduction pockets 136 formed on the inner surface 134 of the wheel spoke 116 are generally illustrated in FIG 3.

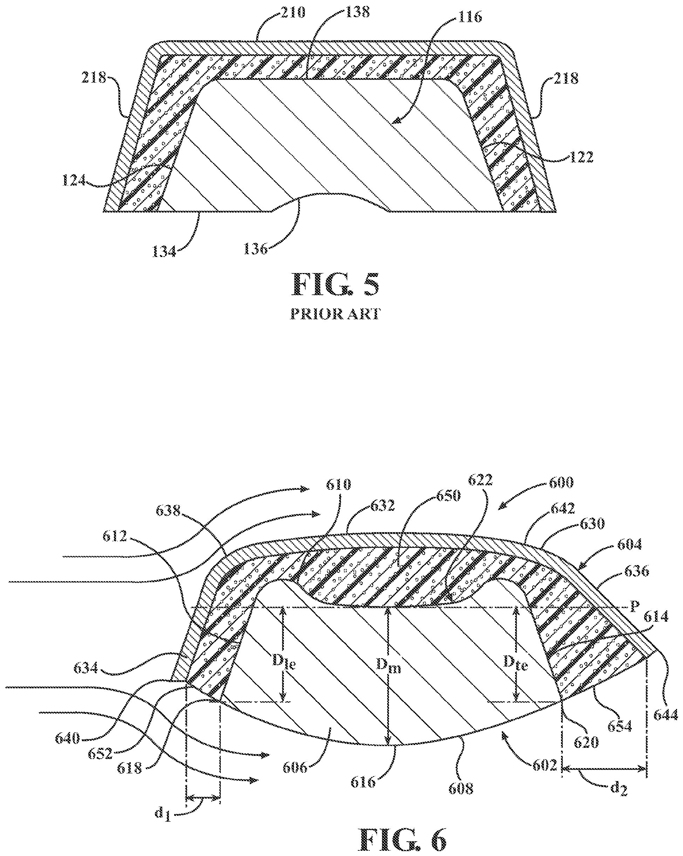

A weight reduction pocket 136 is also illustrated in FIG 5, which schematically illustrates a conventional wheel spoke design for a wheel assembly. As shown in FIG 5, the wheel spoke 116 may be a generally cast metal structure that has a generally uniform cross-section. The wheel spoke 116 has an inner surface 134, an outer surface 138 and a pair of spoke inner side surfaces 122, 124, which extend between the inner surface 134 and the outer surface 138. As shown, a clad spoke 210 can overlie the wheel spoke 116 and encapsulates it on three sides. An adhesive, generally designated by reference number 300, can fill the area between the inboard surface 202 of the clad spoke 210 and the outboard side 104 of the wheel spoke 116. The inner surface 134 of the wheel spoke 116 may be machined and have a weight reduction pocket 136 formed therein through the removal of material. As shown, the weight reduction pocket 136 can be formed as a depression or recess generally in the middle portion of the inner surface 134 of the wheel spoke 116. While this feature serves to lighten the wheel, it negatively impact aerodynamics of the inboard side 104 of the wheel 100.

The aerodynamics of the wheel may be improved by altering the shape of the back, rear or inboard side of the wheel spoke. More specifically, according to an aspect, the inboard side of the wheel spoke can be formed to create an efficient surface that does not pump air, in the same fashion as a propeller or fan would. According to another aspect, the inboard side of the wheel can be formed to minimize the power used to rotate the wheel through the air or can be formed to create an effect that provides a pressure differential between the inboard side and the outboard side of the wheel, allowing the evacuation of high pressure air from underneath the vehicle, thereby reducing the overall drag coefficient of the wheel and vehicle. According to another aspect, the orientation of each of the spokes may be changed to provide an aerodynamic benefit, as discussed above.

FIG 6 illustrates one exemplary design for a wheel assembly that yields improved aerodynamics. As shown, FIG 6 is a cross-section of a portion of wheel assembly 600 according to an aspect of the present disclosure, which yields improved aerodynamics through altering the configuration of the inboard side of the wheel. As shown, the wheel assembly 600 can include a wheel 602 and a wheel clad 604 and the basic components of the wheel and wheel clad may be configured as discussed above. The differences may reside in the configuration of the wheel spoke and the clad spoke.

According to an aspect, the wheel spoke 606 has an inboard surface 608, an outboard surface 610, a leading surface 612 extending between the inboard surface 608 and the outboard surface 610, and a trailing surface 614 extending between the inboard surface 608 and the outboard surface 610. According to another aspect, the inboard surface 608 may be configured as a generally convex shape such that it is generally arcuate in a direction from the leading surface 612 to the trailing surface 614 with a generally middle portion 616 of the inboard surface 608 is bowed away from the outboard surface 610 of the spoke 606. Put another way, the generally middle portion 616 may be disposed a distance (Dm) away from a reference plane (P) defined by the outboard surface 610 of the spoke 606. An inner edge 618 of the leading surface 612 may be disposed a distance (Dle) from the reference plane (P). An inner edge 620 of the trailing surface 614 may be disposed a distance (Dte) from the reference plane (P). According to an aspect, the distance (Dm) may be greater than each of distance (Die) and distance (Dte). According to another aspect, distance (Die) may be equal to distance (Dte). However, distances (Die) and (Dte) do not need to be equal.

According to an aspect, the outboard surface 610 of the wheel spoke 606 can include a weight reduction pocket 622, which can serve to decrease the amount of material that is required to form the wheel spoke thus making the wheel spoke lighter and less expensive. The weight reduction pocket 622 may be sized and shaped in order to maximize the removal of material without compromising the strength or structural integrity of the wheel spoke. The weight reduction pocket may obviously take on a variety of different shapes. Alternatively, instead of a weight reduction pocket, other weight reducing or relief structures may be employed. According to an aspect, the inboard surface of the wheel spoke may be left as-cast. Alternatively, the inboard surface of the spoke could include machining to achieve brake clearance tolerances. Additionally, by placing the weight reduction pocket on the outboard surface 610 of the spoke 606, the inboard side of the spoke can be shaped to have increased aerodynamic effect. According to a still further aspect, the spoke 606 could be rotated either clockwise or counterclockwise (as viewed in FIG 6) about its center such that the inboard surface 608 is angled either downwardly or upwardly with respect to the clad leading surface 634.

According to another aspect, a clad spoke 630 can overlie the wheel spoke 606. The clad spoke 630 can include an outboard surface 632, a leading side surface 634, and a trailing side surface 636. According to a further aspect, the leading side surface 634 has an outer edge 638 and an inner edge 640. The trailing side surface 636 also has an outer edge 642 and an inner edge 644. As shown, the inner edge 638 of the leading side surface 634 of the clad spoke 630 may be spaced a first distance (di) from the inner edge 618 of the leading surface 618 of the wheel spoke 606. As also shown, the inner edge 644 of the trailing side surface 636 of the clad spoke 630 may be spaced a second distance (d2) from the inner edge 620 of the trailing surface 612 of the wheel spoke 606. According to an aspect, the first distance (di) may be greater than the second distance (d2). According to another aspect, the first distance (di)may be substantially greater than the second distance (d2). According to a further aspect, the leading surface 618 of the wheel spoke 606 may be oriented substantially parallel to the leading side surface 634. As also shown, the trailing surface 614 of the wheel spoke 606 may be oriented such that it is not parallel to the trailing side surface 636. Put another way, the leading side surface 634 can be disposed at an angle (a) with respect to the outboard surface 632 which angle may be less than an angle (Θ) as measured between the trailing side surface 636 and the outboard surface 632.

According to another aspect, foam adhesive 650 may be utilized to fill an area between the wheel spoke 606 and the clad spoke 630. According to another aspect, foam adhesive can be utilized to assist in forming at least a portion of an inboard surface 608 of the wheel spoke 606. As shown, a first foam portion 652 can extend between the inner edge 640 of the leading side surface 634 of the clad surface 630 and the inner edge 618 of the leading surface 612 of the wheel spoke 606. According to an aspect, the first foam portion 652 may be disposed flush to the edges 618, 640 and configured to match a contour of the inboard surface 608 of the wheel spoke 606. As also shown, a second foam portion 654 can extend between the inner edge 644 of the trailing side surface 636 of the clad spoke 630 and the inner edge 620 of the trailing surface 614 of the wheel spoke 606. According to another aspect, the second foam portion 654 may be disposed flush to those edges 620, 644 and also configured to match a contour of the inboard surface 608 of the wheel spoke 606. In other words, the foam exposed on the back side of the wheel can be shaped to provide an aero- efficient surface as the front-side to rear-side surface geometry is achieved.

A spoke inboard surface 608 having this configuration can provide an aero- efficient shape that results from the configuration of both the outboard surface and the inboard surface to reduce pumping losses.

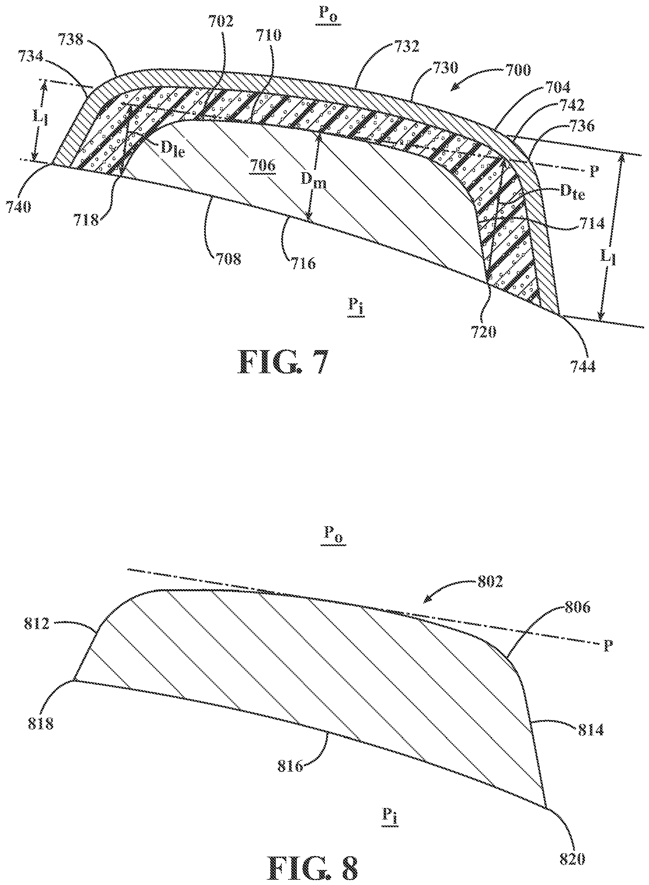

FIG 7 illustrates another exemplary design for a wheel assembly that yields improved vehicle aerodynamics through altering the configuration of the rear side of the wheel spoke. As shown, FIG 7 is a cross-section of a portion of a wheel assembly 700 according to an aspect of the present disclosure. The wheel assembly 700 can include a wheel 702 and a wheel clad 704. The basic components of the wheel and the wheel clad may be configured as discussed above. The differences may reside in the configuration of the wheel spoke and the clad spoke.

According to an aspect, the wheel 702 includes the wheel spoke 706 having an inboard surface 708, an outboard surface 710, and a leading surface 712 extending between the inboard surface 708 and the outboard surface 710, and a trailing surface 714 extending between the inboard surface 708 and the outboard surface 710. According to another aspect, the inboard surface 708 may be configured as a generally concave shape such that it is generally arcuate in a direction from the leading surface 712 to the trailing surface 714 where a generally middle portion 716 of the inboard surface 708 is bowed toward from the outboard surface 710 of the spoke 706. Put another way, the generally middle portion 716 may be disposed a distance (Dm) away from a reference plane (P) defined by the outboard surface 710 of the spoke 706. An inner edge 718 of the leading surface 712 can be disposed a distance (Die) from the reference plane (P). An inner edge 720 of the trailing surface 714 may be disposed a distance (Dte) from the reference plane (P). According to an aspect, the distance (Dm) may be greater than the distance (Die) and less than the distance (Dte). However, the relative distances can vary. By this configuration, the leading surface 712 may be shorter than the trailing surface 714. According to an aspect, the outboard surface 710 of the wheel spoke 706 as defined by the reference plane may be oriented at an angle with respect to the wheel outer surface. According to a further aspect, the wheel spoke 706 could be rotated (either clockwise or counter-clockwise) about a center point so that one of the leading surface 712 or the trailing surface 714 is lower with respect to the Plane (P) than the other. By this configuration, the length of these surfaces 712, 714 could be equal Li = L2.

According to another aspect, a clad spoke 730 can overlie the wheel spoke 706. The clad spoke 730 can include an outboard surface 732, a leading side surface 734, and a trailing side surface 736. According to a further aspect, the leading side surface 734 has an outer edge 738 and an inner edge 740. The trailing side surface 736 also has an outer edge 742 and an inner edge 744. According to this aspect, the inner edge 738 of the leading side surface 734 of the clad spoke 730 may be spaced apart generally the same distance as the distance between the inner edge 744 of the trailing side surface 736 of the clad spoke 730 and the inner edge 720 of the trailing surface 712 of the wheel spoke 706. According to an aspect, the leading side surface 734 of the clad spoke 730 may have a shorter length (Li) than the length (Lt) of the trailing side surface 736. This configuration can yield a pitch in the wheel spoke that creates a pressure differential between outboard pressure zone (Po) and the inboard pressure zone (Pi). Again, the pitch of the spoke could be created through rotation of the spoke about its center.

According to another aspect, foam adhesive may be utilized to fill an area between the wheel spoke 706 and the clad spoke 730. According to another aspect, foam adhesive can be utilized to assist in forming an inboard surface 708 of the wheel spoke 706. As shown, a first foam portion can extend between the inner edge 740 of the leading side surface 734 of the clad surface 730 and the inner edge 718 of the leading surface 712 of the wheel spoke 706. According to an aspect, the first foam portion may be disposed flush to the edges 718, 740 are configured to match a contour of the inboard surface 708 of the wheel spoke 706. As also shown, a second foam portion can extend between the inner edge 744 of the trailing side surface 736 of the clad spoke 730 and the inner edge 720 of the trailing surface 714 of the wheel spoke 706. According to another aspect, the second foam portion may be disposed flush to those edges 720, 744 and also configured to match a contour of the inboard surface 708 of the wheel spoke 706. In other words, the foam exposed on the back side of the wheel can be shaped to provide an aero-efficient surface as the front- side to rear-side surface geometry is achieved.

A spoke inboard surface 708 having this configuration can provide an aero- efficient shape that results from the configuration of both the outboard surface and the inboard surface to reduce pumping losses.

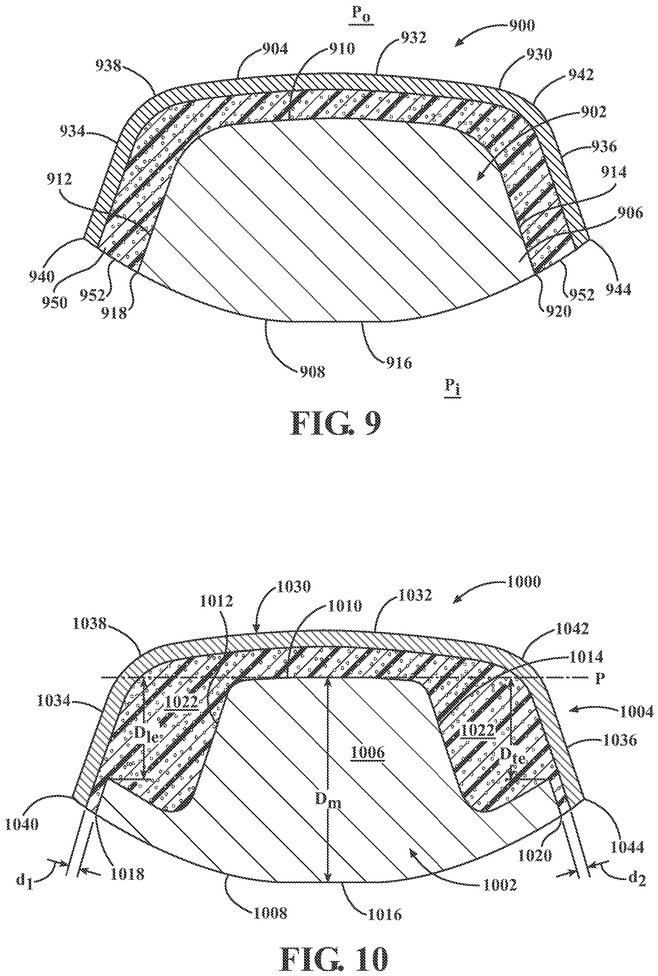

FIG 9 illustrates still another exemplary design for a wheel assembly that yields improved aerodynamics through altering the configuration of the inboard side of the wheel spoke. As shown, FIG 9 is a cross-section of a portion of wheel assembly 900 according to an aspect of the present disclosure. The wheel assembly 900 can include a wheel 902 and a wheel clad 904. The basic components of the wheel and wheel clad may be configured as discussed above. The differences can reside in the configuration of the wheel and clad spoke.

According to an aspect, the wheel spoke 906 has an inboard surface 908, an outboard surface 910, and a leading surface 912 extending between the inboard surface 908 and the outboard surface 910, and a trailing surface 914 extending between the inboard surface 908 and the outboard surface 910. According to another aspect, the inboard surface 908 can be configured as a generally convex shape such that it is generally arcuate in a direction from the leading surface 912 to the trailing surface 914 with a generally middle portion 916 of the inboard surface 908 that is bowed away from the outboard surface 910 of the spoke 906. Put another way, the generally middle portion 916 may be disposed a distance (Dm) away from a reference plane (P) defined by the outboard surface 910 of the spoke 906. According to another aspect, the middle portion 916 can be configured with at least a generally planar section for manufacturing purposes without altering the overall convex shape of the inboard surface 908. An inner edge 918 of the leading surface 912 may be disposed a distance (Die) from the reference plane (P). An inner edge 920 of the trailing surface 914 may be disposed a distance (Dte) from the reference plane (P). According to an aspect, distance (Dm) may be greater than each of distance (Die) and distance (Dte). According to another aspect, distance (Die) may be equal to distance (Dte). However, distances (Die) and (Dte) do not need to be equal.

According to another aspect, a clad spoke 930 can overlie the wheel spoke 906. The clad spoke 930 can include an outboard surface 932, a leading side surface 934, and a trailing side surface 936. According to a further aspect, the leading side surface 934 has an outer edge 938 and an inner edge 940. The trailing side surface 936 also has an outer edge 942 and an inner edge 944. As shown, the inner edge 938 of the leading side surface 934 of the clad spoke 930 may be spaced a first distance (di) from the inner edge 918 of the leading surface 918 of the wheel spoke 906. As also shown, the inner edge 944 of the trailing side surface 936 of the clad spoke 930 may be spaced a second distance (d2) from the inner edge 920 of the trailing surface 912 of the wheel spoke 906. According to an aspect, the first distance (di) and the second distance (d2) may be generally equal. According to a further aspect, the leading surface 918 of the wheel spoke 906 may be oriented substantially parallel to the leading side surface 934 of the wheel spoke. As also shown, the trailing surface 914 of the wheel spoke 906 may also be oriented substantially parallel to the trailing side surface 936 of the clad spoke.

According to another aspect, foam adhesive 950 may be utilized to fill an area between the wheel spoke 906 and the clad spoke 930. According to another aspect, foam adhesive can be utilized to assist in forming an inboard surface 908 of the wheel spoke 906. As shown, a first foam portion 952 may extend between the inner edge 940 of the leading side surface 934 of the clad surface 930 and the inner edge 918 of the leading surface 912 of the wheel spoke 906. According to an aspect, the first foam portion 952 can be disposed flush to the edges 918, 940 and configured to match a contour of the inboard surface 908 of the wheel spoke 906. As also shown, a second foam portion 954 can extend between the inner edge 944 of the trailing side surface 936 of the clad spoke 930 and the inner edge 920 of the trailing surface 914 of the wheel spoke 906. According to another aspect, the second foam portion 954 may be disposed flush to those edges 920, 944 and also configured to match a contour of the inboard surface 908 of the wheel spoke 906. In other words, the foam exposed on the back side of the wheel can be shaped to provide an aero-efficient surface as the front-side to rear-side surface geometry is achieved.

A wheel spoke having this configuration can provide an aero-efficient shape that results from the configuration of both the outboard surface and the inboard surface to reduce pumping losses. According to an aspect, the surface shape of the inboard surface, the outboard surface, and the side surfaces can create a shape for efficient ventilation drag by reducing the pumping effect.

FIG 10 illustrates still a further exemplary design for a wheel assembly that yields improved aerodynamics through altering the configuration of the inboard side of the wheel spoke. As shown, FIG 10 is a cross-section of a portion of a wheel assembly 1000 according to an aspect of the present disclosure. The wheel assembly 1000 can include a wheel 1002 and a wheel clad 1004. The basic components of the wheel and wheel clad may be configured, as discussed above. The differences can reside in the configuration of the wheel and clad spoke.

According to an aspect, the wheel spoke 1006 has an inboard surface 1008, an outboard surface 1010, and a leading surface 1012 extending between the inboard surface 1008 and the outboard surface 1010, and a trailing surface 1014 extending between the inboard surface 1008 and the outboard surface 1010. According to another aspect, the inboard surface 1008 is configured with a generally convex shape such that it is generally arcuate in a direction from the leading surface 1012 to the trailing surface 1014 where a generally middle portion 1016 of the inboard surface 1008 is bowed away from the outboard surface 1010 of the spoke 1006. Put another way, the generally middle portion 1016 may be disposed a distance (Dm) away from a reference plane (P) defined by the outboard surface 1010 of the spoke 1006. According to another aspect, the middle portion 1016 can be configured with at least a generally planar portion for manufacturing purposes without altering the overall convex shape of the inboard surface 1008. An inner edge 1018 of the leading surface 1012 may be disposed a distance (Dle) from the reference plane (P). An inner edge 1020 of the trailing surface 1014 may be disposed a distance (Dte) from the reference plane (P). According to an aspect, distance (Dm) can be greater than each of distance (Die) and distance (Dte). According to another aspect, distance (Die) may be equal to distance (Dte). However, distances (Die) and (Dte) do not need to be equal. Again, as discussed above, the spokes could be rotated about its center to change its pitch.

According to an aspect, the outboard surface 1010 of the wheel spoke 1006 can include a pair of weight reduction structures 1022, which can serve to decrease the amount of material that is required to form the wheel spoke. As shown, the weight reduction structures 1022 may be formed in the leading surface 1012 and the trailing surface 1014. The weight reduction structures 1022 may be sized and shaped in order to maximize the removal of material without compromising the strength or structural integrity of the wheel spoke. The weight reduction structures 1022 may obviously take on a variety of different shapes. Alternatively, other weight reducing or relief structures may be employed. Additionally, by placing the weight reduction structures on the outboard side and side surfaces of the spoke, the inboard side of the spoke can be shaped to have increased aerodynamic effect.

According to another aspect, a clad spoke 1030 can overlie the wheel spoke1006. The clad spoke 1030 can include an outboard surface 1032, a leading side surface 1034, and a trailing side surface 1036. According to a further aspect, the leading side surface 1034 has an outer edge 1038 and an inner edge 1040. The trailing side surface 1036 also has an outer edge 1042 and an inner edge 1044. As shown, the inner edge 1038 of the leading side surface 1034 of the clad spoke 1030 may be spaced a first distance (di) from the inner edge 1018 of the leading surface 1012 of the wheel spoke 1006. As also shown, the inner edge 1044 of the trailing side surface 1036 of the clad spoke 1030 may be spaced a second distance (d2) from the inner edge 1020 of the trailing surface 1014 of the wheel spoke 1006. According to an aspect, the first distance (di) and the second distance (d2) may be generally equal. According to a further aspect, the first distance (di) and the second distance (d2) may be very small such that there is little space between the inner edges 1018, 1020 of the wheel spoke 1006 and the inner edges 1040, 1044 of the clad spoke 1030. By this configuration, the inboard surface 1008 of the wheel spoke 1006 may be almost entirely responsible for the spoke shape. According to an aspect, the foam exposed on the back side of the wheel can be shaped to provide an aero-efficient surface as the front-side to rear-side surface geometry is achieved.

According to another aspect, foam adhesive 1050 may be utilized to fill an area between the wheel spoke 1006 and the clad spoke 1030.

A wheel spoke having this configuration can provide an aero-efficient shape that results from the configuration of both the outboard surface and the inboard surface to reduce pumping losses. According to an aspect, the surface shape of the inboard surface, the outboard surface, and the side surfaces can create a shape for efficient ventilation drag by reducing the pumping effect.

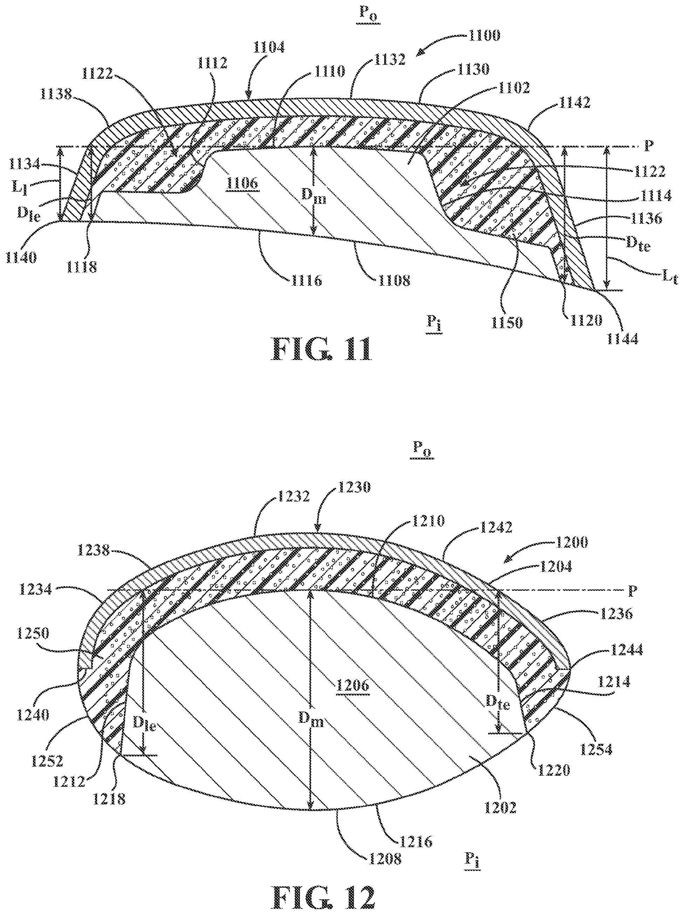

FIG 11 illustrates one exemplary design for a wheel assembly that yields improved aerodynamics through altering the configuration of the inboard side of the wheel spoke. As shown, FIG 11 is a cross-section of a portion of a wheel assembly 1100 according to an aspect of the present disclosure. The wheel assembly 1100 includes a wheel 1102 and a wheel clad 1104. The basic components of the wheel and the wheel clad may be configured as discussed above. The differences can reside in the configuration of the wheel and clad spoke.

According to an aspect, the wheel 1102 includes the wheel spoke 1106 having an inboard surface 1108, an outboard surface 1110, and a leading surface 1112 extending between the inboard surface 1108 and the outboard surface 1110, and a trailing surface 1114 extending between the inboard surface 1108 and the outboard surface 1110. According to another aspect, the inboard surface 1108 may be configured as a generally concave shape such that it is generally arcuate in a direction from the leading surface 1112 to the trailing surface 1114 where a generally middle portion 1116 of the inboard surface 1108 is bowed toward from the outboard surface 1110 of the spoke 1106. Put another way, the generally middle portion 1116 may be disposed a distance (Dm) away from a reference plane P defined by the outboard surface 1110 of the spoke 1106. An inner edge 1118 of the leading surface 1112 may be disposed a distance (Dle)from the reference plane (P). An inner edge 1120 of the trailing surface 1114 may be disposed a distance (Dte) from the reference plane (P). According to an aspect, distance (Dm) may be greater than distance (Die) and less than distance (Dte). However, the relative distances can vary. By this configuration, the leading surface 1112 may be shorter than the trailing surface 1114. According to an aspect, the outboard surface 1110 of the wheel spoke 1106 as defined by the reference plane (P) may be oriented at an angle with respect to the wheel outer surface, as shown. According to a further aspect, the wheel spoke 1106 could be rotated (either clockwise or counter-clockwise) about a center point so that one of the leading surface 1112 or the trailing surface 1114 is lower with respect to the Plane (P) than the other. By this configuration, the length of these surfaces 1112, 1114 could be equal Li = L2.

According to an aspect, the outboard surface 1100 of the wheel spoke 1106 can include a pair of weight reduction structures 1122, which can serve to decrease the amount of material that is required to form the wheel spoke. As shown, the weight reduction structures may be formed in the leading surface 1112 and the trailing surface 1114. The weight reduction structures 1122 may be sized and shaped in order to maximize the removal of material without compromising the strength or structural integrity of the wheel spoke. The weight reduction structures 1122 may obviously take on a variety of different shapes. Alternatively, other weight reducing or relief structures may be employed. Additionally, by placing the weight reduction structures on the outboard side and side surfaces of the spoke, the inboard side of the spoke can be shaped to have increased aerodynamic effect.

According to another aspect, a clad spoke 1130 can overlie the wheel spoke 1106. The clad spoke 1130 can include an outboard surface 1132, a leading side surface 1134, and a trailing side surface 1136. According to a further aspect, the leading side surface 1134 has an outer edge 1138 and an inner edge 1140. The trailing side surface 1136 also has an outer edge 1142 and an inner edge 1144. According to this aspect, the inner edge 1138 of the leading side surface 1134 of the clad spoke 1130 may be spaced apart generally the same distances as the distance between the inner edge 1144 of the trailing side surface 1136 of the clad spoke 1130 and the inner edge 1120 of the trailing surface 1112 of the wheel spoke 1106. According to an aspect, the leading side surface 1134 of the clad spoke 1130 may have a shorter length (Li) than the length (Lt) of the trailing side surface 1136. This configuration can yield a pitch in the wheel spoke that creates a pressure differential between outboard pressure zone (Po) and the inboard pressure zone (Pi). As first distance (di) between the inner edge 1118 of the wheel spoke leading surface 1112 and the inner edge 1138 of the clad spoke leading side surface 1134 may be very small. Similarly, a second distance (d2) between the inner edge 1144 of the clad spoke trailing side surface 1134 and the inner edge 1120 of the wheel spoke trailing surface 1112 is also very small. By this configuration, the inboard surface 1108 of the wheel spoke 1106 may be almost entirely responsible for the shape if the inner side of the spoke. According to a further aspect, the wheel spoke 1106 could be rotated (either clockwise or counter-clockwise) about a center point so that one of the leading surface 1112 or the trailing surface 1114 is lower with respect to the Plane (P) than the other. By this configuration, the length of these surfaces 1112, 1114 could be equal Li = L2.

According to another aspect, foam adhesive 1150 may be utilized to fill an area between the wheel spoke 1106 and the clad spoke 1130. A spoke inboard surface 1108 having this configuration can provide an aero-efficient shape that results from the configuration of both the outboard surface and the inboard surface to reduce pumping losses.

FIG 12 illustrates one exemplary design for a wheel assembly that yields improved aerodynamics through altering the configuration of the inboard side of the wheel spoke. As shown, FIG 12 is a cross-section of a portion of a wheel assembly 1200 according to an aspect of the present disclosure. The wheel assembly 1200 includes a wheel 1202 and a wheel clad 1204. The basic components of the wheel and the wheel clad may be configured as discussed above. The differences can reside in the configuration of the wheel and the clad spoke.

According to an aspect, the wheel spoke 1206 has an inboard surface 1208, an outboard surface 1210, and a leading surface 1212 extending between the inboard surface 1208 and the outboard surface 1210, and a trailing surface 1214 extending between the inboard surface 1208 and the outboard surface 1210. According to another aspect, the inboard surface 1208 can be configured as a generally convex shape such that it is generally arcuate in a direction from the leading surface 1212 to the trailing surface 1214 with a generally middle portion 1216 of the inboard surface 1208 being bowed away from the outboard surface 1210 of the spoke 1206. Put another way, the generally middle portion 1216 may be disposed a distance (Dm) away from a reference plane (P) defined by the outboard surface 1210 of the spoke 1206. An inner edge 1218 of the leading surface 1212 may be disposed a distance (Die) from the reference plane (P). An inner edge 1220 of the trailing surface 1214 may be disposed a distance (Dte) from the reference plane (P). According to an aspect, distance (Dm) may be greater than each of distance (Die) and distance (Dte). According to another aspect, distance (Die) may be equal to distance (Dte). However, distances (Die) and (Dte) do not need to be equal. According to a further aspect, the wheel spoke 1206 could be rotated (either clockwise or counter-clockwise) about a center point so that one of the leading surface 1212 or the trailing surface 1214 is lower with respect to the Plane (P) than the other. By this configuration, the length of these surfaces 1212, 1214 could be equal Li = L2.

According to another aspect, a clad spoke 1230 can overlie the wheel spoke 1206. According to an aspect, the clad spoke 1230 may be generally egg-shaped. As shown, the clad spoke 1230 can include an outboard surface 1232, a leading side surface 1234, and a trailing side surface 1236. According to a further aspect, the leading side surface 1234 has an outer edge 1238 and an inner edge 1240. The trailing side surface 1236 also has an outer edge 1242 and an inner edge 1244. As shown, the leading side surface 1234 and the trailing side surface 1234 may terminate at their inner edges 1240, 1244 adjacent the outboard surface 1232 of the wheel spoke 1206. Additionally, the shapes and degrees of curvature of the leading side surface 1234 and the trailing side surface 1236 may vary. As shown, the leading side surface 1234 may extend inwardly with respect to the clad spoke outboard surface 1232 such that its downturn (as viewed in the FIG) is relatively sharp. According to an aspect, this can generally match the orientation of the wheel spoke leading surface 1212. As also shown, the trailing side surface 1236 may extend inwardly with respect to the clad spoke outboard surface 1232 such that its downturn (as viewed in the FIG) is more gradual. According to an aspect, this can generally match the orientation of the wheel spoke trailing edge 1214.

According to another aspect, foam adhesive 1250 may be utilized to fill an area between the wheel spoke 1206 and the clad spoke 1230. According to another aspect, foam adhesive can be utilized to assist in forming an inboard surface 1208 of the wheel spoke 1206. As shown, a first foam portion 1252 may extend between the inner edge 1240 of the leading side surface 1234 of the clad surface 1230 and the inner edge 1218 of the leading surface 1212 of the wheel spoke 1206. According to an aspect, the first foam portion 1252 can be disposed flush to the edges 1218, 1240 and configured to match a contour of the inboard surface 1208 of the wheel spoke 1206. As also shown, a second foam portion 1254 can extend between the inner edge 1244 of the trailing side surface 1236 of the clad spoke 1230 and the inner edge 1220 of the trailing surface 1214 of the wheel spoke 1206. According to another aspect, the second foam portion 1254 may be disposed flush to those edges 1220, 1244 and also configured to match a contour of the inboard surface 1208 of the wheel spoke 1206. In other words, the foam exposed on the back side of the wheel can be shaped to provide an aero-efficient surface as the front-side to rear-side surface geometry is achieved.

A wheel spoke having this configuration can provide an aero-efficient shape that results from the configuration of both the outboard surface and the inboard surface to reduce pumping losses. According to an aspect, the surface shape of the inboard surface, the outboard surface, and the side surfaces can create a shape for efficient ventilation drag by reducing the pumping effect.

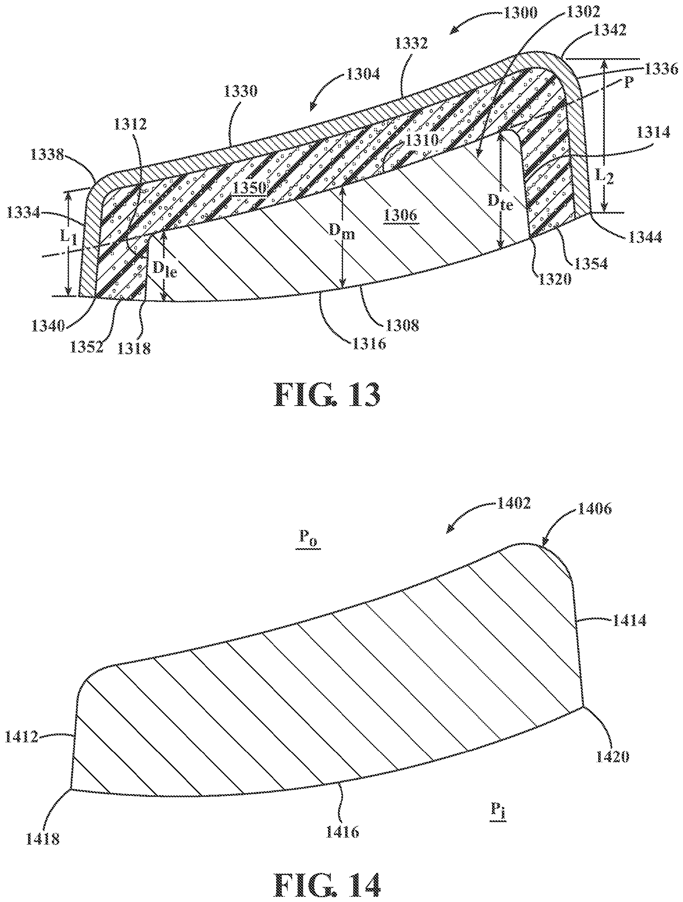

FIG 13 illustrates one exemplary design for a wheel assembly that yields improved aerodynamics through altering the configuration of the inboard side of the wheel spoke. As shown, FIG 13 is a cross-section of a portion of a wheel assembly 1300 according to an aspect of the present disclosure. The wheel assembly 1300 can include a wheel 1302 and a wheel clad 1304. The basic components of the wheel and the wheel clad may be configured as discussed above. The differences can reside in the configuration of the wheel and the clad spoke.

According to an aspect, the wheel 1302 includes the wheel spoke 1306 having an inboard surface 1308, an outboard surface 1310, and a leading surface 1312 extending between the inboard surface 1308 and the outboard surface 1310, and a trailing surface 1314 extending between the inboard surface 1308 and the outboard surface 1310. According to another aspect, the inboard surface 1308 may be configured as a generally convex shape such that it is generally arcuate in a direction from the leading surface 1312 to the trailing surface 1314 where a generally middle portion 1316 of the inboard surface 1308 is bowed toward the outboard surface 1310 of the spoke 1306. The outboard surface 1310 may have a similar shape. Put another way, the generally middle portion 1316 may be disposed a distance (Dm) away from a reference plane (P) defined by the outboard surface 1310 of the spoke 1306. An inner edge 1318 of the leading surface 1312 may be disposed a distance (Die) from the reference plane (P). An inner edge 1320 of the trailing surface 1314 may be disposed a distance (Dte) from the reference plane (P). According to an aspect, the distance (Dm) may be greater than the distance (Die) and less than the distance (Dte). However, the relative distances can vary. By this configuration, the leading surface 1312 may be shorter than the trailing surface 1314. According to an aspect, the outboard surface 1310 of the wheel spoke 1306 as defined by the reference plane may be oriented at an angle with respect to the wheel outer surface. According to a further aspect, the wheel spoke 1306 could be rotated (either clockwise or counter-clockwise) about a center point so that one of the leading surface 1312 or the trailing surface 1314 is lower with respect to the Plane (P) than the other. By this configuration, the length of these surfaces 1312, 1314 could be equal Li = L2.

According to another aspect, a clad spoke 1330 can overlie the wheel spoke 1306. The clad spoke 1330 can include an outboard surface 1332, a leading side surface 1334, and a trailing side surface 1336. According to a further aspect, the leading side surface 1334 has an outer edge 1338 and an inner edge 1340. The trailing side surface 1336 also has an outer edge 1342 and an inner edge 1344. According to this aspect, the inner edge 1338 of the leading side surface 1334 of the clad spoke 1330 may be spaced apart generally the same distances as the distance between the inner edge 1344 of the trailing side surface 1336 of the clad spoke 1330 and the inner edge 1320 of the trailing surface 1312 of the wheel spoke 1306. According to an aspect, the leading side surface 1334 of the clad spoke 1330 may have a shorter length (Li) than the length (Lt) of the trailing side surface 1336. This configuration can yield a pitch in the wheel spoke that creates a pressure differential between outboard pressure zone (Po) and the inboard pressure zone (Pi).

According to another aspect, foam adhesive 1350 may be utilized to fill an area between the wheel spoke 1306 and the clad spoke 1330. According to another aspect, foam adhesive can be utilized to assist in forming an inboard surface 1308 of the wheel spoke 1306. As shown, a first foam portion 1352 may extend between the inner edge 1340 of the leading side surface 1334 of the clad surface 1330 and the inner edge 1318 of the leading surface 1312 of the wheel spoke 1306. According to an aspect, the first foam portion 1352 may be disposed flush to the edges 1318, 1340 and configured to match a contour of the inboard surface 1308 of the wheel spoke 1306. As also shown, a second foam portion 1354 can extend between the inner edge 1344 of the trailing side surface 1336 of the clad spoke 1330 and the inner edge 1320 of the trailing surface 1314 of the wheel spoke 1306. According to another aspect, the second foam portion 1354 may be disposed flush to those edges 1320, 1344 and also configured to match a contour of the inboard surface 1308 of the wheel spoke 1306. In other words, the foam exposed on the back side of the wheel can be Attorney Docket No. 29881-851 shaped to provide an aero-efficient surface as the front-side to rear-side surface geometry is achieved.

A spoke inboard surface 1308 having this configuration can provide an aero- efficient shape that results from the configuration of both the outboard surface and the inboard surface to reduce pumping losses.

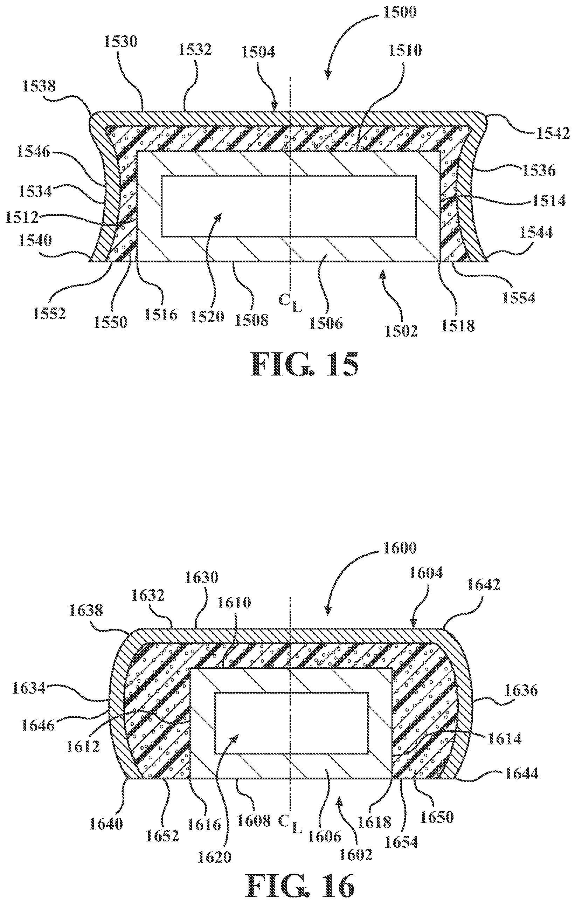

FIG 15 illustrates a design for a wheel according to the invention that yields improved aerodynamics through altering the configuration of the leading edge and trailing edge of the wheel clad. As shown, FIG 15 is a cross-section of a portion of a wheel assembly 1500 according to an aspect of the present disclosure. The wheel assembly 1500 can include a wheel 1502 and a wheel clad 1504. The basic components of the wheel and the wheel clad may be configured as discussed above. The differences can reside in the configuration of the wheel and the clad spoke.

According to an aspect, the wheel 1502 includes a wheel spoke 1506 having an inboard surface 1508, an outboard surface 1510, a leading surface 1512 extending between the inboard surface 1508 and the outboard surface 1510, and a trailing surface 1514 extending between the inboard surface 1508 and the outboard surface 1510. According to another aspect, the inboard surface 1508 and the outboard surface 1510 may each be generally planar and parallel to one another. Similarly, the wheel leading surface 1512 and the wheel trailing surface 1514 may be configured as generally planar surfaces that are parallel to one another. However, the surfaces could each have a variety of different configurations. For example, the wheel spoke surfaces can match the configuration of the clad spoke surfaces, as discussed below. According to a further aspect, the wheel spoke 1506 can include one or more pockets 1520 formed in its interior. For example, the wheel spoke 1506 may be formed by a hollow core casting process such that the pockets 1520 are formed in the spoke interiors such that they spokes are generally hollow. As will be appreciated, interior spoke pockets can decrease the weight of the wheel without affecting its structural integrity, which can provide a lighter wheel assembly resulting in improved fuel economy for a vehicle as well as other aerodynamic benefits. It will be appreciated that hollow pockets in the spokes can be formed in a variety of different ways by a variety of different processes. It will further be appreciated that the pockets 1520 can have a variety of different configurations.

According to another aspect, a clad spoke 1530 can overlie the wheel spoke1506. The clad spoke 1530 can include an outboard surface 1532, a leading side surface 1534, and a trailing side surface 1536. According to a further aspect, the leading side surface 1534 has an outer edge 1538 adjacent the outboard surface 1532 and an inner edge 1540 opposite the outer edge 1538. The trailing side surface 1536 also has an outer edge 1542 adjacent the outboard surface 1532 and an inner edge 1544 opposite the outer edge 1538. According to this aspect, the leading side surface 1534 may be configured as a generally concave shape such that it is generally arcuate in a direction from the outer edge 1538 to the inner edge 1540 where a generally middle portion 1546 of the leading side surface 1534 is bowed inwardly. The trailing side surface 1536 may have a similar shape. According to a still further aspect, the trailing side surface 1536 may have a different shape than the leading side surface 1534. Further, the trailing and leading side surfaces 1536, 1534 may have other non-planar shapes.

According to another aspect, foam adhesive 1550 may be utilized to fill an area between the wheel spoke 1506 and the clad spoke 1530. According to another aspect, foam adhesive can be utilized to assist in forming the inboard surface 1508 of the wheel spoke 1506. As shown, a first foam portion 1552 may extend between the inner edge 1540 of the leading side surface 1534 of the clad surface 1530 and an inner edge 1516 of the leading surface 1512 of the wheel spoke 1506. According to an aspect, the first foam portion 1552 may be disposed flush to the edges 1518, 1540 and configured to match a contour of the inboard surface 1508 of the wheel spoke 1506. As also shown, a second foam portion 1554 can extend between the inner edge 1544 of the trailing side surface 1536 of the clad spoke 1530 and an inner edge 1518 of the trailing surface 1514 of the wheel spoke 1506. According to another aspect, the second foam portion 1554 may be disposed flush to those edges 1520, 1544 and also configured to match a contour of the inboard surface 1508 of the wheel spoke 1506. In other words, the foam exposed on the back side of the wheel can be shaped to provide an aero-efficient surface as the front-side to rear-side surface geometry is achieved.

A spoke leading side surface 1534 having this configuration can provide an aero-efficient shape that results from the configuration of both the outboard surface and the inboard surface to reduce pumping losses.

FIG 16 illustrates another exemplary design for a wheel assembly that yields improved aerodynamics through altering the configuration of the leading edge and trailing edge of the wheel clad. As shown, FIG 16 is a cross-section of a portion of a wheel assembly 1600 according to an aspect of the present disclosure. The wheel assembly 1600 can include a wheel 1602 and a wheel clad 1604. The basic components of the wheel and the wheel clad may be configured as discussed above. The differences can reside in the configuration of the wheel and the clad spoke.

According to an aspect, the wheel 1602 includes a wheel spoke 1606 having an inboard surface 1608, an outboard surface 1610, a leading surface 1612 extending between the inboard surface 1608 and the outboard surface 1610, and a trailing surface 1614 extending between the inboard surface 1608 and the outboard surface 1610. According to another aspect, the inboard surface 1608 and the outboard surface 1610 may each be generally planar and parallel to one another. Similarly, the wheel leading surface 1612 and the wheel trailing surface 1614 may be configured as generally planar surfaces that are parallel to one another. However, the surfaces could each have a variety of different configurations. For example, the wheel spoke surfaces can match the configuration of the clad spoke surfaces, as discussed below. According to a further aspect, the wheel spoke 1606 can include one or more pockets 1620 formed in its interior. For example, the wheel spoke 1606 may be formed by a hollow core casting process such that the pockets 1620 are formed in the spoke interiors such that they spokes are generally hollow. As will be appreciated, interior spoke pockets can decrease the weight of the wheel without affecting its structural integrity, which can provide a lighter wheel assembly resulting in improved fuel economy for a vehicle as well as other aerodynamic benefits. It will be appreciated that hollow pockets in the spokes can be formed in a variety of different ways by a variety of different processes. It will further be appreciated that the pockets 1620 can have a variety of different configurations.

According to another aspect, a clad spoke 1630 can overlie the wheel spoke1606. The clad spoke 1630 can include an outboard surface 1632, a leading side surface 1634, and a trailing side surface 1636. According to a further aspect, the leading side surface 1634 has an outer edge 1638 adjacent the outboard surface 1632 and an inner edge 1640 opposite the outer edge 1638. The trailing side surface 1636 also has an outer edge 1642 adjacent the outboard surface 1632 and an inner edge 1644 opposite the outer edge 1638. According to this aspect, the leading side surface 1634 may be configured as a generally convex shape such that it is generally arcuate in a direction from the outer edge 1638 to the inner edge 1640 where a generally middle portion 1646 of the leading side surface 1634 is bowed outwardly. The trailing side surface 1636 may have a similar shape. According to a still further aspect, the trailing side surface 1636 may have a different shape than the leading side surface 1634. Further, the trailing and leading side surfaces 1636, 1634 may have other non-planar shapes.

According to another aspect, foam adhesive 1650 may be utilized to fill an area between the wheel spoke 1606 and the clad spoke 1630. According to another aspect, foam adhesive 1650 can be utilized to assist in forming the inboard surface 1608 of the wheel spoke 1606. As shown, a first foam portion 1652 may extend between the inner edge 1640 of the leading side surface 1634 of the clad surface 1630 and an inner edge 1616 of the leading surface 1612 of the wheel spoke 1606. According to an aspect, the first foam portion 1652 may be disposed flush to the edges 1618, 1640 and configured to match a contour of the inboard surface 1608 of the wheel spoke 1606. As also shown, a second foam portion 1654 can extend between the inner edge 1644 of the trailing side surface 1636 of the clad spoke 1630 and an inner edge 1618 of the trailing surface 1614 of the wheel spoke 1606. According to another aspect, the second foam portion 1654 may be disposed flush to those edges 1620, 1644 and also configured to match a contour of the inboard surface 1608 of the wheel spoke 1606. In other words, the foam exposed on the back side of the wheel can be shaped to provide an aero-efficient surface as the front-side to rear-side surface geometry is achieved.

A spoke leading side surface 1634 having this configuration can provide an aero-efficient shape that results from the configuration of both the outboard surface and the inboard surface to reduce pumping losses.

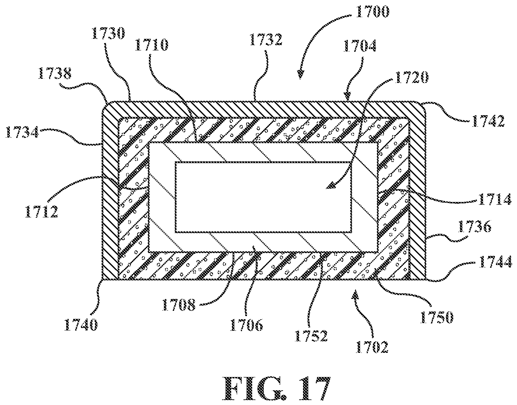

FIG 17 illustrates another exemplary design for a wheel assembly that yields improved aerodynamics through altering the configuration of the inboard side and outboard side of the wheel clad. As shown, FIG 17 is a cross-section of a portion of a wheel assembly 1700 according to an aspect of the present disclosure. The wheel assembly 1700 can include a wheel 1702 and a wheel clad 1704. The basic components of the wheel and the wheel clad may be configured as discussed above. The differences can reside in the configuration of the wheel and the clad spoke.

According to an aspect, the wheel 1702 includes a wheel spoke 1706 having an inboard surface 1708, an outboard surface 1710, a leading surface 1712 extending between the inboard surface 1708 and the outboard surface 1710, and a trailing surface 1714 extending between the inboard surface 1708 and the outboard surface 1710. According to another aspect, the inboard surface 1708 and the outboard surface 1710 may each be generally planar and parallel to one another. Similarly, the wheel leading surface 1712 and the wheel trailing surface 1714 may be configured as generally planar surfaces that are parallel to one another. However, the surfaces could each have a variety of different configurations. According to a further aspect, the wheel spoke 1706 can include one or more pockets 1720 formed in its interior. For example, the wheel spoke 1706 may be formed by a hollow core casting process such that the pockets 1720 are formed in the spoke interiors such that they spokes are generally hollow. As will be appreciated, interior spoke pockets can decrease the weight of the wheel without affecting its structural integrity, which can provide a lighter wheel assembly resulting in improved fuel economy for a vehicle as well as other aerodynamic benefits. It will be appreciated that hollow pockets in the spokes can be formed in a variety of different ways by a variety of different processes. It will further be appreciated that the pockets 1720 can have a variety of different configurations.

According to another aspect, a clad spoke 1730 can overlie the wheel spoke1706. The clad spoke 1730 can include an outboard surface 1732, a leading side surface 1734, and a trailing side surface 1736. According to a further aspect, the leading side surface 1734 has an outer edge 1738 adjacent the outboard surface 1732 and an inner edge 1740 opposite the outer edge 1738. The trailing side surface 1736 also has an outer edge 1742 adjacent the outboard surface 1732 and an inner edge 1744 opposite the outer edge 1738. According to this aspect, the leading side surface 1734 and the trailing side surface 1736 may have a variety of different configurations.

According to another aspect, foam adhesive 1750 may be utilized to fill an area between the wheel spoke 1706 and the clad spoke 1730. According to another aspect, foam adhesive can be utilized to assist in forming the inboard side of the wheel assembly 1700. As shown, the inboard surface 1752 of the wheel 1708 may be recessed with respect to the inner edge 1740 of the leading side surface 1734 and the inner edge 1744 of the trailing side surface 1736. According to this aspect, the foam adhesive 1750 may fully encapsulate the wheel spoke 1706 such that its forms the inboard side 1752 of the wheel assembly. According to another aspect, the adhesive foam 1750 may be disposed flush with the inner edge 1740 of the leading side surface 1734 and the inner edge 1744 of the trailing side surface 1736. Utilization of the foam adhesive 1750 to form the inboard side of the wheel assembly 1700 allows the inboard side 1752 to be formed in a variety of shapes, including planar, curved, convex, and concave. A variety of other shapes may also be employed.

A wheel assembly 1700 having this configuration can provide an aero- efficient shape that results from the configuration of both the outboard surface and the inboard surface to reduce pumping losses.

## Claims

1. A wheel for a vehicle, comprising:
an inner hub portion configured to receive a vehicle axle therethrough and defining an axis of rotation at a center thereof;
an outer rim portion;
a plurality of wheel spoke (116, 706, 806, 906) portions extending generally between the inner hub portion (106) and the outer rim portion;
the inner hub portion (106), the outer rim portions, and the plurality of wheel spoke (116, 706, 806, 906) portions cooperate to form a wheel outer surface having a plurality of turbine openings (120);
wherein each of the plurality of wheel spoke (116, 706, 806, 906) portions has an outboard side adjacent the wheel outer surface, an inboard side opposite the outboard side, a leading side surface (1534) extending generally in a direction between the inner hub portion (106) and the outer rim portion and between the outboard side and the inboard side, and a trailing side surface extending generally in a direction between the inner hub portion (106) and the outer rim portion and extending between the outboard side and the inboard side in spaced relationship with the leading side surface and opposite the leading side surface;
a plurality of clad spokes (210) each overlying one of the wheel spoke portions, each of the clad spokes (210) including an outboard surface overlying the outboard side of the wheel spoke (116, 706, 806, 906) portion, a leading side surface (1534) overlying the leading side surface of the wheel spoke (116, 706, 806, 906) portion, and a trailing side surface (1536) overlying the trailing side surface of the wheel spoke (116, 706, 806, 906) portion; and at least a segment of one of the leading side (1534) and trailing side surfaces (1536) of each of the clad spokes (210) having a non-planar shape;
at least one of the leading and trailing side surfaces (1534, 1536) of each of the clad spokes (1506) has a concave shape arcing in a direction toward the other of the leading and trailing side surfaces (1534, 1536) substantially across its length to provide improve aerodynamic performance of the wheel;
the leading and trailing side surfaces (1534, 1536) of the cladding are symmetrical on opposing sides,
the inboard surface (1508) and the outboard surface (1510) each are planar and parallel to one another

2. A wheel as set forth in Claim 1 wherein the leading side surface (1534) of each of the clad spokes has an outer edge adjacent to the outboard surface and an inner edge opposite the outer edge, and the trailing edge surface (1536) of each of the clad spokes (210) has an outer edge adjacent to the outboard surface and an inner edge opposite the outer edge; wherein the lead side surface has a generally concave shape from the outer edge to the inner edge, and wherein a middle portion of the leading side surface is bowed inwardly.

3. A wheel as set forth in Claim 1 wherein each of the wheel spoke portions defines at least one pocket.

4. A wheel as set forth in Claim 1 wherein a foam adhesive is disposed between each of the wheel spoke portions and the overlying clad spoke (210), and wherein the foam adhesive includes a first foam portion extending between the inner edge of the leading side surface (1534) of the clad spoke and an inner edge of the leading surface of the wheel spoke portion..

5. A wheel as set forth in Claim 4 wherein the first foam portion is disposed flush to the inner edges and is configured to match a contour of the inboard surface of the wheel spoke.

6. A wheel as set forth in Claim 4 wherein a foam adhesive is disposed between each of the wheel spoke portions and the overlying clad spoke; and wherein a second foam portion extends between the inner edge of the trailing side surface of the clad spoke and an inner edge of the trailing side surface (1536) of the wheel spoke portion.

7. A wheel as set forth in Claim 6 wherein the second foam portion is disposed flush to the inner edges and also configured to match a contour of the inboard surface of the wheel spoke.

## Patentansprüche

1. Rad für ein Fahrzeug, umfassend:
einen inneren Nabenabschnitt, der so ausgestaltet ist, dass er eine Fahrzeugachse aufnimmt und eine Drehachse in seiner Mitte definiert;
einen äußeren Felgenabschnitt;
eine Vielzahl von Radspeichenabschnitten (116, 706, 806, 906), die sich allgemein zwischen dem inneren Nabenabschnitt (106) und dem äußeren Felgenabschnitt erstrecken;
der innere Nabenabschnitt (106), die äußeren Felgenabschnitte und die Vielzahl von Radspeichenabschnitten (116, 706, 806, 906) wirken zusammen, um eine Radaußenfläche mit einer Vielzahl von Turbinenöffnungen (120) zu bilden;
wobei jeder der Vielzahl von Radspeichenabschnitten (116, 706, 806, 906) eine an die Radaußenfläche angrenzende Außenseite, eine der Außenseite gegenüberliegende Innenseite, eine vordere Seitenfläche (1534), die sich im Allgemeinen in eine Richtung zwischen dem inneren Nabenabschnitt (106) und dem äußeren Felgenabschnitt und zwischen der Außenseite und der Innenseite erstreckt, hat und eine hintere Seitenfläche, die sich im Allgemeinen in eine Richtung zwischen dem inneren Nabenabschnitt (106) und dem äußeren Felgenabschnitt erstreckt und sich zwischen der Außenseite und der Innenseite beabstandet von der vorderen Seitenfläche und gegenüber der vorderen Seitenfläche erstreckt;
eine Vielzahl von ummantelten Speichen (210), die jeweils über einem der Radspeichenabschnitte liegen, wobei jede der ummantelten Speichen (210) eine Außenfläche umfasst, die über der Außenseite des Radspeichenabschnitts (116, 706, 806, 906) liegt, eine vordere Seitenfläche (1534), die über der vorderen Seitenfläche des Radspeichenabschnitts (116, 706, 806, 906) liegt, und eine hintere Seitenfläche (1536), die über der hinteren Seitenfläche des Radspeichenabschnitts (116, 706, 806, 906) liegt; und wobei mindestens ein Segment einer der vorderen Seitenflächen (1534) und hinteren Seitenflächen (1536) jeder der ummantelten Speichen (210) eine nicht ebene Form aufweist;
mindestens eine der vorderen und hinteren Seitenflächen (1534, 1536) jeder der ummantelten Speichen (1506) hat eine konkave Form, die sich in Richtung der anderen der vorderen und hinteren Seitenflächen (1534, 1536) im Wesentlichen über ihre Länge wölbt, um die aerodynamische Leistung des Rades zu verbessern;
die vorderen und hinteren Seitenflächen (1534, 1536) der Ummantelung sind auf gegenüberliegenden Seiten symmetrisch, die Innenfläche (1508) und die Außenfläche (1510) sind jeweils eben und verlaufen parallel zueinander.

2. Rad nach Anspruch 1, wobei die vordere Seitenfläche (1534) jeder der ummantelten Speichen eine an die Außenfläche angrenzende Außenkante und eine der Außenkante gegenüberliegende Innenkante aufweist, und die hintere Kantenfläche (1536) jeder der ummantelten Speichen (210) eine an die Außenfläche angrenzende Außenkante und eine der Außenkante gegenüberliegende Innenkante aufweist;
wobei die vordere Seitenfläche im Allgemeinen eine konkave Form von der Außenkante zur Innenkante aufweist und wobei ein mittlerer Abschnitt der vorderen Seitenfläche nach innen gebogen ist.

3. Rad nach Anspruch 1, wobei jeder der Radspeichenabschnitte mindestens eine Aussparung definiert.

4. Rad nach Anspruch 1, wobei ein Schaumkleber zwischen jedem der Radspeichenabschnitte und der darüber liegenden ummantelten Speiche (210) angeordnet ist, und wobei der Schaumkleber einen ersten Schaumabschnitt aufweist, der sich zwischen der Innenkante der vorderen Seitenfläche (1534) der ummantelten Speiche und einer Innenkante der vorderen Fläche des Radspeichenabschnitts erstreckt.

5. Rad nach Anspruch 4, wobei der erste Schaumabschnitt bündig zu den Innenkanten angeordnet und so ausgestaltet ist, dass er zu einer Kontur der Innenfläche der Radspeiche passt.

6. Rad nach Anspruch 4, wobei zwischen jedem der Radspeichenabschnitte und der darüber liegenden ummantelten Speiche ein Schaumstoffkleber angeordnet ist; und wobei sich ein zweiter Schaumabschnitt zwischen der Innenkante der hinteren Seitenfläche der ummantelten Speiche und einer Innenkante der hinteren Seitenfläche (1536) des Radspeichenabschnitts erstreckt.

7. Rad nach Anspruch 6, wobei der zweite Schaumabschnitt bündig zu den Innenkanten angeordnet ist und auch so ausgestaltet ist, dass er zu einer Kontur der Innenfläche der Radspeiche passt.

## Revendications

1. Roue pour un véhicule, comprenant :
une partie de moyeu interne conçue pour recevoir un essieu de véhicule à travers elle et définissant un axe de rotation au centre de celle-ci ;
une partie de jante externe ;
une pluralité de parties de rayon de roue (116, 706, 806, 906) s'étendant généralement entre la partie de moyeu interne (106) et la partie de jante externe ;
la partie de moyeu interne (106), les parties de jante externes et la pluralité de parties de rayon de roue (116, 706, 806, 906) coopèrent pour former une surface externe de roue ayant une pluralité d'ouvertures de turbine (120) ;
dans laquelle chacun de la pluralité de parties de rayon de roue (116, 706, 806, 906) a un côté extérieur adjacent à la surface externe de roue, un côté intérieur opposé au côté extérieur, une surface latérale d'attaque (1534) s'étendant généralement dans une direction entre la partie de moyeu interne (106) et la partie de jante externe et entre le côté extérieur et le côté intérieur, et une surface latérale de fuite s'étendant généralement dans une direction entre la partie de moyeu interne (106) et la partie de jante externe et s'étendant entre le côté extérieur et le côté intérieur en relation espacée avec la surface latérale d'attaque et à l'opposé de la surface latérale d'attaque ;
une pluralité de rayons plaqués (210) sus-jacents à chacun l'une des parties de rayon de roue, chacun des rayons plaqués (210) comportant une surface extérieure sus-jacente au côté extérieur de la partie de rayon de roue (116, 706, 806, 906), une surface latérale d'attaque (1534) sus-jacente à la surface latérale d'attaque de la partie de rayon de roue (116, 706, 806, 906), et une surface latérale de fuite (1536) sus-jacente à la surface latérale de fuite de la partie de rayon de roue (116, 706, 806, 906) ; et au moins un segment de l'une des surfaces latérales d'attaque (1534) et de fuite (1536) de chacun des rayons plaqués (210) ayant une forme non plane ;
au moins l'une des surfaces latérales d'attaque et de fuite (1534, 1536) de chacun des rayons plaqués (1506) a une forme concave s'incurvant dans une direction vers l'autre des surfaces latérales d'attaque et de fuite (1534, 1536) sensiblement sur toute sa longueur pour améliorer les performances aérodynamiques de la roue ;
les surfaces latérales d'attaque et de fuite (1534, 1536) du plaquage sont symétriques sur les côtés opposés, la surface intérieure (1508) et la surface extérieure (1510) sont planes et parallèles l'une à l'autre.

2. Roue selon la revendication 1, dans laquelle la surface latérale d'attaque (1534) de chacun des rayons plaqués a un bord externe adjacent à la surface extérieure et un bord interne opposé au bord externe, et la surface de bord de fuite (1536) de chacun des rayons plaqués (210) a un bord externe adjacent à la surface extérieure et un bord interne opposé au bord externe ;
dans laquelle la surface latérale d'attaque a une forme généralement concave du bord externe au bord interne, et dans lequel une partie centrale de la surface latérale d'attaque est incurvée vers l'intérieur.

3. Roue selon la revendication 1, dans laquelle chaque partie de rayon de roue définit au moins une poche.

4. Roue selon la revendication 1, dans laquelle une mousse adhésive est disposée entre chacune des parties de rayon de roue et le rayon plaqué (210) sus-jacent, et dans laquelle la mousse adhésive comprend une première partie de mousse s'étendant entre le bord interne de la surface latérale d'attaque (1534) du rayon plaqué et un bord interne de la surface d'attaque de la partie de rayon de roue.

5. Roue selon la revendication 4, dans laquelle la première partie de mousse est disposée au ras des bords internes et est conçue pour correspondre à un contour de la surface intérieure du rayon de roue.

6. Roue selon la revendication 4, dans laquelle une mousse adhésive est disposée entre chacune des parties de rayon de roue et le rayon plaqué sus-jacent ; et dans laquelle une deuxième partie mousse s'étend entre le bord interne de la surface latérale de fuite du rayon plaqué et un bord interne de la surface latérale de fuite (1536) de la partie de rayon de roue.

7. Roue selon la revendication 6, dans laquelle la seconde partie de mousse est disposée au ras des bords internes et également conçue pour correspondre à un contour de la surface intérieure du rayon de roue.
